# EUROPÄISCHE PATENTANMELDUNG

(11) **EP 1 034 732 A1**
(43) Veröffentlichungstag der Anmeldung: **13.09.2000**
(21) Anmeldenummer: 99104720.0
(22) Anmeldetag: 10.03.1999
(51) Int. Cl.: A47J 45/06

(54) **Griff aus Metall für ein Kochgefäss und Verfahren zur Herstellung eines solchen Griffes**

(71) Anmelder: Heinrich Baumgarten KG Spezialfabrik für Beschlagteile, D-57277 Neunkirchen (DE)
(72) Erfinder: Baumgarten, Gerd-Diethard, 57234 Wilnsdorf-Wilden (DE)
(74) Vertreter: Missling, Arne, Dipl.-Ing.

(57) **Zusammenfassung**

Ein Griff aus Metall für ein Kochgefäß wird aus einer an dem Kochgefäß befestigbaren Halteplatte (1) und einem Stiel (2) zusammengesetzt, die an ihrer Verbindungsstelle mittels Widerstand-Buckelschweißung miteinander verbunden sind; eine Aufweitung (11) des zugehörigen Stielendes ermöglicht die Ausbildung von dafür erforderlichen Schweißbuckeln (14).

## Beschreibung

Die Erfindung betrifft einen Griff aus Metall für ein Kochgefäß, beispielsweise einen Kochtopf, eine Bratpfanne oder dergleichen, mit einem als Handhabe dienenden rohrförmigen Stiel und einer an dem Stiel befestigten Halteplatte, die mit dem Kochgefäß verbindbar ist. Die Erfindung betrifft ferner ein Verfahren zur Herstellung eines solchen Griffes.

Bei einem Griff mit einem an einer Halteplatte befestigten Stiel müssen diese beiden recht unterschiedlich konfigurierten Teile dauerhaft haltbar und so miteinander verbunden sein, daß eine Nahtstelle zwischen ihnen unauffällig und ästhetisch vertretbar gestaltet ist und gleichzeitig der dafür erforderliche Aufwand in Grenzen bleibt. Die Nahtstelle ist in der Regel als Stoffschluß ausgebildet.

Es ist bekannt, bei einen solchen Griff die Halteplatte mit einer der inneren Kontur des zu befestigenden Stielendes folgenden Einziehung zu versehen, die auf der dem Stiel zugewandten Seite der Halteplatte einen Führungsbund für das Stielende ausbildet und so das darauf gesteckte Stielende quer zu der Längsachse des Stieles arretiert. Eine Hartlötnaht zwischen der Halteplatte und der an dieser anliegenden Stirnfläche des Stielendes stellt einen Stoffschluß zwischen beiden Teilen her, der auch maschinell, beispielsweise durch elektrische Widerstandslötung, und damit sehr rationell herstellbar ist. Die Hartlötnaht fällt auf diese Weise tatsächlich relativ unauffällig aus und beeinträchtigt das Aussehen des Griffes nicht, so daß diese Form der Verbindung beider Teile des Griffes häufig angewendet wird. Allerdings ist die Festigkeit der Hartlötnaht, insbesondere ihre Warmfestigkeit, beschränkt und genügt vor allem dann nicht, wenn das mit dem Griff versehene Kochgefäß auf einem Gasherd mit einer offenen Gasflamme betrieben wird, vor allem bei der Verwendung von Erdgas. Dabei kann örtlich und dementsprechend auch im Bereich der Hartlötnaht eine sehr hohe Temperatur auftreten, welche die Festigkeit stark herabsetzt und, vor allem bei zusätzlicher mechanischer Belastung, bis zur Auflösung der Hartlötnaht führen kann.

Eine wesentliche, weitgehend ausreichende Verbesserung der Warmfestigkeit des Stoffschlusses zwischen den beiden Teilen des Griffes erzielt man durch die Anwendung einer Schweißverbindung. Eine solche Anordnung verwendet eine Halteplatte mit einer der äußeren Kontur des Stielendes folgenden Durchbrechung; das Stielende ist durch diese Durchbrechung gesteckt und mit seiner Stirnfläche auf der später an dem Kochgefäß anliegenden Fläche der Halteplatte etwas überstehend, so daß dort das Stielende und die Halteplatte mittels einer durch Lichtbogen-Schmelzschweißung ausgeführten Schweißnaht miteinander verbunden sind. Die Anordnung läßt sich bequem so gestalten, daß die Schweißnaht versenkt angebracht ist und weder die Anbringung der Halteplatte an dem Kochgefäß behindert noch sichtbar ist, wenn die Halteplatte an dem Kochgefäß befestigt ist. Die Durchbrechung in der Halteplatte erfordert einen erheblichen Aufwand und eine etwas größere Halteplatte als nötig, und der selbst bei einer maschinell ausgeführten Schweißnaht unvermeidliche Wärmeeintrag bei der Herstellung der Schweißnaht führt an dem Stiel gelegentlich zu Anlauffarben, die dann mühsam wieder entfernt werden müssen, so daß die Vorteile gegenüber einer Hartlötverbindung stark relativiert sind.

Die Erfindung hat sich die Aufgabe gestellt, einen Griff der eingangs näher bezeichneten Art und ein Verfahren zu seiner Herstellung anzugeben, bei denen die beschriebenen, den bekannten Lösungen anhaftenden Nachteile nicht auftreten und ein dauerhaft hochwarmfester Verbund der miteinander verbundenen Teile gewährleistet ist, der rationell hergestellt werden kann und keine Nacharbeit erfordert.

Erfindungsgemäß wird die Aufgabe zunächst durch einen Griff entsprechend dem Oberbegriff des Patentanspruches 1 gelöst, bei dem eine an der Halteplatte anliegende stirnseitige Berandung des Stieles an einer Aufweitung des Stieles angeordnet ist, welche ein axial an die Berandung anschließendes Randstück des Stieles umfaßt, wobei auf dem Umfang der Berandung verteilte Schweißbuckel angeformt und mit der Halteplatte durch eine elektrische Widerstands-Buckelschweißung verbunden sind. Auf diese Weise kann auf eine Durchbrechung verzichtet und gleichwohl der sichere Stoffschluß einer Schweißung zur Verbindung beider Teile verwendet werden. Andererseits gewährleistet die Anbringung von Schweißbuckeln, die in einem noch zu beschreibenden einfachen Arbeitsschritt erfolgt, daß durch den dadurch möglichen Einsatz der elektrischen Widerstandsschweißung nur eine ganz geringe Wärmetönung in Kauf genommen werden muß; der Stiel bleibt dabei thermisch weitgehend unbelastet, die Gefahr, daß an ihm Anlauffarben auftreten, besteht nicht.

Die Schweißbuckel sind dabei am besten gleichförmig auf dem Umfang der Berandung verteilt; es ist besonders vorteilhaft, wenn sie so bemessen sind, daß sie nach der Verschweißung nicht mehr erkennbar sind und die gesamte Berandung an der Halteplatte ganz oder nahezu ununterbrochen anliegt, so daß eine durchgehende Stoßkante gebildet wird und keine Unregelmäßigkeiten verbleiben. Hier ist gegebenenfalls überhaupt nicht mehr erkennbar, daß der Griff aus zwei Teilen gefügt worden ist. Ganz besonders elegant läßt sich die Verbindung gestalten, wenn die Aufweitung so geformt ist, daß sie nach der Verschweißung des Griffes mit der Halteplatte einen stetigen Übergang zwischen der Mantelfläche des Stieles und der an der Berandung des Stieles anliegenden Oberfläche der Halteplatte ausbildet.

Für eine funktions- und formschöne Verbindung der Halteplatte mit dem Kochgefäß ist es vorteilhaft, wenn die Halteplatte zumindest in einem die Berandung des Stieles umkränzenden, vorzugsweise bis zu dem umlaufenden Rand der Halteplatte verlaufenden ersten Bereich so gewölbt ist, daß sie in diesem Bereich flächig an dem Kochgefäß anliegt. Bei einer solchen Gestaltung kann die Halteplatte so dicht an dem Kochgefäß anliegend befestigt sein, daß zwischen beiden keine Schmutzpartikel eindringen können.

Die Halteplatte kann in einem von der Berandung des Stieles eingefaßten zweiten Bereich eben ausgebildet sein; die Zuordnung des Stieles wird noch einfacher, wenn die Halteplatte mit einem die Berandung des Stieles einfassenden Führungsbund versehen ist, der von einer Einziehung oder Aufwölbung der Halteplatte gebildet sein kann. Der Führungsbund kann dabei sowohl die Innen- als auch die Außenkontur des Stielendes beranden, ohne daß davon die Herstellung der Buckelschweißung beeinträchtigt würde.

Ein solcher Griff ist auf einfache Weise durch ein Verfahren herstellbar, bei dem der auf seiner dem Kochgefäß zugewandten Seite in einer zunächst ebenen Stirnfläche endende Stiel in einem von der Stirnfläche ausgehenden Randstück trichterförmig aufgeweitet wird und der Stiel an der äußeren Mantelfläche der Randzone hinterfangen und von seiner inneren Mantelfläche aus die Stirnfläche plastisch verformt, beispielsweise gekümpelt wird in der Weise, daß die stielseitige Randzone der Stirnfläche in eine umlaufende Reihung von durch Zwischenräume voneinander getrennten, die Berandung des Stieles bildenden Schweißbuckeln aufgelöst wird. Die Ausstellung des Randstückes bietet sowohl für ein Formungswerkzeug als auch für eine Gegenauflage bei der plastischen Verformung der Randzone genügend Angriffsfläche und ermöglicht eine relativ beliebige Ausbildung dieser Randzone. Dabei kann das Randstück in bevorzugter Ausführung sowohl kegelstumpfförmig als auch als Kurvatur ausgebildet sein; beide Formgebungen gestatten einen ästhetisch befriedigenden Übergang von dem Stiel auf die Halteplatte.

Die Einzelheiten der Erfindung werden nachfolgend anhand der Zeichnung an einem Ausführungsbeispiel näher erläutert. Es zeigen
- Fig.1: einen Griff nach der Erfindung in seiner Gebrauchslage,
- Fig.2: eine Draufsicht zu Fig.1,
- Fig.3: eine Seitenansicht zu Fig.1, jedoch ohne den Stiel,
- Fig.4: eine Einzelheit X aus Fig.2, ohne die Halteplatte und etwas vergrößert,
- Fig.5: eine Seitenansicht zu Fig.4 und
- Fig.6: eine Einzelheit Y aus Fig.4 vor der Verformung der Berandung, wiederum etwas vergrößert,
sämtlich in schematisch vereinfachter Darstellung.

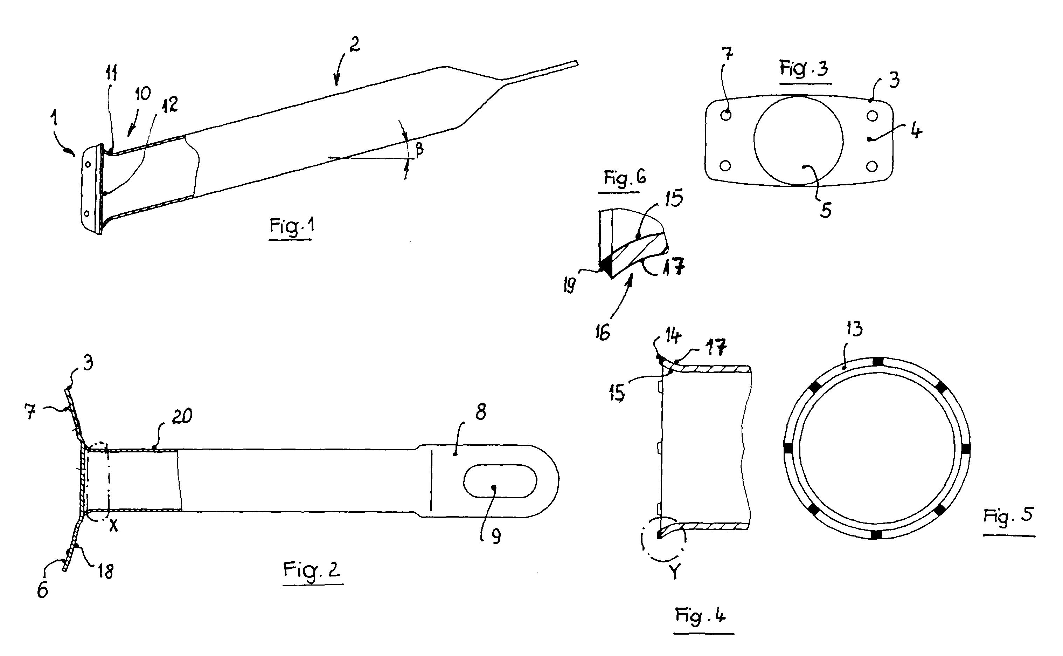

In den Fig.1,2 der Zeichnung ist ein vollständiger Griff nach der Erfindung dargestellt. Er besteht aus einer Halteplatte 1 und einem an dieser befestigten Stiel 2.

Die Halteplatte 1 besteht (Fig.3) aus einem ersten, gewölbt ausgebildeten, von einem umlaufenden Rand 3 eingefaßten Bereich 4, der einen ebenen, zweiten Bereich 5 umgibt; beide Bereiche 4,5 stoßen dort zusammen, wo der Stiel 2 an der ihm zugewandte Oberfläche 18 der Halteplatte 1 anliegt. In der Fig.3 ist zu sehen, daß der Rand 3 auch den zweiten Bereich 5 tangiert.

Die Halteplatte 1 ist mit ihrem ersten, gewölbten Bereich 4 dem zugehörigen, in der Zeichnung weggelassenen Kochgefäß angepaßt, an dem sie mit einer Kontaktfläche 6 so satt anliegend befestigbar ist, daß sich keine Schmutzpartikel zwischen der Halteplatte 1 und dem Kochgefäß festsetzen können. Dazu wird der Griff an dem Kochgefäß in passender Weise befestigt, in der Regel mittels elektrischer Widerstands-Punkt- oder Buckelschweißung; für diese sind an der Halteplatte 1, auf ihrer dem Kochgefäß zugewandten, sonst glatten Kontaktfläche 6 vorstehend, einige Schweißbuckel 7 (Fig.3) eingeprägt. Der zweite, ebene Bereich 5 der Halteplatte 1 ist aus dem gewölbten Verlauf des Bereiches 4 etwas ausgestellt, so daß er dessen flächige Anlage an dem Kochgefäß nicht behindert.

Der rohrförmige Stiel 2 ist auf seinem von der Halteplatte 1 abgewandten, flach zusammengedrückten Ende 8 zu einer Öse 9 durchbrochen, während an seinem anderen, hier (Fig.1) um einen Winkel β schräg zu einer zunächst ebenen Stirnfläche 19 abgeschnittenen Ende ein Randstück 10 einer trichterförmig gekehlten Aufweitung 11 unterzogen ist und in einer stirnseitigen, an der Halteplatte 1 anliegende Berandung 12 des Stieles 2 endet, die entsprechend Fig.4-6 für eine stoffschlüssige Verbindung des Stieles 2 mit der Halteplatte 1 vorbereitet ist. Die Aufweitung 11 ist so geformt, daß die Mantelfläche 20 des Stieles 2 stetig in die Oberfläche 18 der Halteplatte 1 übergeht.
In den Fig.4-6 ist die Berandung 12 so gezeigt, wie sie aus dem Randstück 10 vor dem Verschweißen mit der Halteplatte 1 ausgeformt ist. Dabei ist die Berandung 12 plastisch in der Weise verformt, daß in gleichmäßiger Verteilung (Fig.5) einige durch Zwischenräume 13 getrennte Schweißbuckel 14 verbleiben, die beim darauffolgenden Verschweißen der Berandung 12 mit dem Haltestück 1 abgetragen werden, so daß sich eine durchgehende, praktisch nicht mehr erkennbare Stoßstelle entsprechend Fig.2 ergibt.

Die plastische Verformung der Berandung 12 erfordert einen erheblichen Kraftaufwand, der erst durch die Aufweitung 11 ermöglicht wird, weil (Fig.6) eine entsprechende Preßkraft auf die innere Mantelfläche 15 ihrer Randzone 16 an deren äußerer Mantelfläche 17 gegengehaltert werden kann.

### Aufstellung der verwendeten Bezugszeichen

- 1: Halteplatte
- 2: Stiel
- 3: Rand
- 4: (erster) Bereich
- 5: (zweiter) Bereich
- 6: Kontaktfläche
- 7: Schweißbuckel (an der Halteplatte 1)
- 8: Ende
- 9: Öse
- 10: Randstück
- 11: Aufweitung
- 12: Berandung
- 13: Zwischenraum
- 14: Schweißbuckel (an der Berandung 12)
- 15: (innere) Mantelfläche
- 16: Randzone
- 17: (äußere) Mantelfläche
- 18: Oberfläche
- 19: Stirnfläche
- 20: Mantelfläche

- β: Winkel

## Patentansprüche

1. Griff aus Metall für ein Kochgefäß, beispielsweise einen Kochtopf, eine Bratpfanne oder dergleichen, mit einem als Handhabe dienenden rohrförmigen Stiel (2) und einer an dem Stiel (2) befestigten Halteplatte (1), die mit dem Kochgefäß verbindbar ist, **dadurch gekennzeichnet, daß** eine an der Halteplatte (1) anliegende stirnseitige Berandung (12) des Stieles (2) an einer Aufweitung (11) des Stieles (2) angeordnet ist, welche ein axial an die Berandung (12) anschließendes Randstück (10) des Stieles (2) umfaßt, wobei auf dem Umfang der Berandung (12) verteilte Schweißbuckel (14) angeformt und mit der Halteplatte (1) durch eine elektrische Widerstands-Buckelschweißung verbunden sind.

2. Griff nach Anspruch 1, dadurch gekennzeichnete, daß die Schweißbuckel (14) gleichförmig auf dem Umfang der Berandung (12) verteilt sind.

3. Griff nach Anspruch 1 oder 2, dadurch gekennzeichnet, daß die Schweißbuckel (14) so bemessen sind, daß sie nach der Verschweißung nicht mehr erkennbar sind und die gesamte Berandung (12) an der Halteplatte (1) ganz oder nahezu ununterbrochen anliegt.

4. Griff nach einem der Ansprüche 1 bis 3, dadurch gekennzeichnet, daß die Aufweitung (11) so geformt ist, daß sie nach der Verschweißung des Griffes mit der Halteplatte (1) einen stetigen Übergang zwischen der Mantelfläche (20) des Stieles (2) und der an der Berandung (12) des Stieles (2) anliegenden Oberfläche (18) der Halteplatte (1) ausbildet.

5. Griff nach einem der Ansprüche 1 bis 4, dadurch gekennzeichnet, daß die Halteplatte (1) zumindest in einem die Berandung (12) des Stieles (2) umkränzenden, vorzugsweise bis zu dem umlaufenden Rand (3) der Halteplatte (1) verlaufenden ersten Bereich (4) so gewölbt ist, daß sie in diesem Bereich (4) flächig an dem Kochgefäß anliegt.

6. Griff nach einem der Ansprüche 1 bis 5, dadurch gekennzeichnet, daß die Halteplatte (1) in einem von der Berandung (12) des Stieles (2) eingefaßten zweiten Bereich (5) eben ausgebildet ist.

7. Griff nach einem der Ansprüche 1 bis 6, dadurch gekennzeichnet, daß die Halteplatte (1) mit einem die Berandung (12) des Stieles (2) einfassenden Führungsbund versehen ist.

8. Griff nach Anspruch 7 dadurch gekennzeichnet, daß der Führungsbund von einer Einziehung oder Aufwölbung der Halteplatte (1) gebildet wird.

9. Verfahren zur Herstellung eines Griffes nach einem der vorhergehenden Ansprüche, dadurch gekennzeichnet, daß
(a) der auf seiner dem Kochgefäß zugewandten Seite in einer zunächst ebenen Stirnfläche (19) endende Stiel (2) in einem von der Stirnfläche (19) ausgehenden Randstück (10) trichterförmig aufgeweitet wird und danach
(b) der Stiel (2) an der äußeren Mantelfläche (17) der Randzone (16) hinterfangen und von seiner inneren Mantelfläche (15) aus die Stirnfläche (19) plastisch verformt, beispielsweise gekümpelt wird in der Weise, daß die stielseitige Randzone (16) der Stirnfläche (19) in eine umlaufende Reihung von durch Zwischenräume (13) voneinander getrennten, die Berandung (12) des Stieles (2) bildenden Schweißbuckeln (14) aufgelöst wird.

10. Verfahren nach Anspruch 9, dadurch gekennzeichnet, daß das Randstück (10) kegelstumpfförmig ausgebildet wird.

11. Verfahren nach Anspruch 9, dadurch gekennzeichnet, daß das Randstück (10) als Kurvatur ausgebildet wird.
